# EUROPEAN PATENT SPECIFICATION

(11) **EP 3 021 013 B1**
(45) Date of publication and mention of the grant of the patent: **05.09.2018**
(21) Application number: 14822189.8
(22) Date of filing: 10.07.2014
(51) Int. Cl.: F16J 15/06, G02B 6/44, H02G 3/08

(54) **SEALING STRUCTURE**
DICHTUNGSSTRUKTUR
STRUCTURE D'ÉTANCHÉITÉ

(30) Priority: 10.07.2013 CN 201320409520 U
(43) Date of publication of application: 18.05.2016
(73) Proprietor: ZTE Corporation, Shenzhen, Guangdong 518057 (CN)
(72) Inventor: CHEN, Shanjun, Shenzhen Guangdong 518057 (CN); LI, Xu, Shenzhen Guangdong 518057 (CN); PENG, Dianming, Shenzhen Guangdong 518057 (CN)
(74) Representative: Lavoix
(86) International application number: PCT/CN2014/081980
(87) International publication number: WO 2015/003645

(56) References cited:
- EP-A2- 1 717 922
- WO-A1-01/57980
- CN-A- 101 504 479
- CN-A- 102 073 112
- CN-A- 102 313 952
- CN-U- 203 374 790
- DE-A1-102008 022 055
- FR-A1- 2 723 162
- US-A1- 2006 099 842
- US-A1- 2007 007 038

## Description

### TECHNICAL FIELD

The present disclosure relates to the technical field of sealing, and more particularly, to a sealing structure.

### BACKGROUND

Currently, a pursuit of high reliability, high compatibility, high field maintenance operation reliability, lower cost and the like of equipment in the field of communications has become an important competitiveness promoting way of each equipment manufacturer. A maintenance window, serving as an important structure function unit of the equipment, is required to meet above requirements of the equipment.

Conventional sealing structures of the maintenance window are designed for specific sealing interface installation modes and wire diameters of incoming and outgoing wires substantially, requirements for processing of structural parts and for a variation range of the wire diameters are extremely high, and therefore a high hidden cost is brought; and meanwhile, installation requirements for sealing are strict, requirements for maintenance operation normalization of the equipment are high, and sealing and a complete machine may fail due to any careless operations. Thus, these sealing structures have defects that the sealing reliability is low, thereby being not applicable to multiple occasions; the compatible wire diameter sizes of the sealing structures are small, the sealing structures are sensitive to size variation, and components are heavily stressed during sealing locking; and installation modes of the sealing structures adopt dispensing fixing modes, the solidification time of glue is long, the operation is complicated, and the requirements for the maintenance operation normalization are increased.

According to DE 10 2008 022055 A1, a box for connecting an output line of a solar panel with a feed cable has a base mountable on the solar panel, formed with at least one cutout through which the feed cable passes, and having a generally planar floor and around the floor a seal seat open orthogonally in one direction of the floor. A cover is engageable oppositely of the direction with the base to from therewith a compartment. Functional elements are provided in the compartment, A seal in the seat is engaged between the base and the cover.

According to EP 1 717 922 A2, the box has a housing with upper and lower sections, and cylindrical sealing bushes (6) mounted in access openings and including longitudinal through bores. Integral annular sealing ribs (4) extending within circular grooves seal a space between the bushes and inner walls of the access openings. Deformable internal sealing lips on an inner circumferential wall of the through bores seal a space between an outer circumference of a conductor (15) and inner circumferential surface of the bores. Closure plugs are provided for sealing the bores of sealing bushes which are not in use.

According to WO 01/57980 A1, a waterproof enclosure for an electrical cable/lead comprises first and second seals, each seal including a semi-conical shaped tunnel having a membrane closure means at the narrow conical end to effect waterproof closure when no cable or lead is present.

According to FR 2 723 162 A1, ring seal tightness is described.

According to US 2007/007038 A1, sealing member for an entry port is described.

### SUMMARY

An embodiment of the present disclosure is intended to provide a sealing structure, which is used to solve technical problems in the related art. A plurality of modules provided with sealing components, compressing components and assembling components are assembled and butted, thereby improving the reliability, compressibility and compatibility of the sealing structure. The sealing structure is simple, convenient and fast to install and maintain, can be used in multiple occasions, and can be widely applied to various technical fields of sealing.

The features of the method and device according to the present disclosure are defined in the independent claims, and the preferable features according to the present invention are defined in the dependent claims.

Compared with the related art, the embodiment of the present disclosure has the advantages as follows:
1) according to the sealing structure according to the embodiment of the present disclosure, the cover plate provided with the first sealing element and the housing provided with the second sealing element are assembled and connected, and the first sealing element and the second sealing element are butted and fixed together, so that a sealing cavity is formed inside a constituted integral structure, and the sealing structure is strong in sealing property, high in module compatibility, and convenient and fast to assemble and disassemble;
2) in the embodiment of the present disclosure, the sealing strip and the sealing pad of the first sealing element are provided with the double-peak sealing face portion and the first wire passing hole groove respectively, the second sealing element is provided with the plug portion, and the main sealing portion is provided with the components such as the ribs, the second wire passing hole groove, the clamping ring and the coating layer, which are butted and assembled, thereby greatly improving the sealing reliability of the sealing structure in case of no cable;
3) in the embodiment of the present disclosure, the sealing pad of the first sealing element is provided with the first material reducing groove, the preset inclined angle is formed between the two combined surfaces of the sealing strip and the sealing pad, and the main sealing portion of the second sealing element is provided with the second material reducing groove, the ribs and the like, so that the larger compression amount, appropriate filling rate and smaller structural part stress of the sealing structure are guaranteed, and meanwhile, the perfect combination of all parts of the first sealing element and the second sealing element and the appropriate compression amount are ensured;
4) in the embodiment of the present disclosure, the components such as the first clamping groove and the clamping rib of the first sealing element and the second clamping groove of the second sealing element are in butted cooperation with the cover plate, the housing and the like, thereby being simple, convenient and fast in installation and maintenance;
5) in the embodiment of the present disclosure, the assembling combination of the cover plate, the housing, the first sealing element and the second sealing element can be applied to different sealing interface installation modes and a certain wire diameter variation, and the compatibility is high; and
6) the sealing structure according to the embodiment of the present disclosure is high in generality, can be used in multiple occasions, and can be widely applied to various technical fields of sealing.

### BRIEF DESCRIPTION OF THE DRAWINGS

Fig. 1 is a composition diagram of a sealing structure according to an embodiment of the present disclosure;
Fig. 2a is a top structure diagram of a first sealing element according to an embodiment of the present disclosure;
Fig. 2b is a bottom structure diagram of a first sealing element according to an embodiment of the present disclosure;
Fig. 2c is an enlarged view of a position A of a section a-a' as shown in Fig. 2b;
Fig. 2d is a sectional view of a section b-b' as shown in Fig. 2b;
Fig. 3a is a top structure diagram of a second sealing element according to an embodiment of the present disclosure;
Fig. 3b is a bottom structure diagram of a second sealing element according to an embodiment of the present disclosure;
Fig. 3c is a sectional view of a section a-a' as shown in Fig. 3a;
Fig. 3d is a structural diagram of a state of clamping coordination between a plug portion and a main sealing portion as shown in Fig. 3a;
Fig. 3e is a front view of a first sealing element as shown in Fig. 3a;
Fig. 3f is a sectional view of a section b-b' as shown in Fig. 3e;
Fig. 4 is a structural diagram of a sealing strip of the first sealing element cooperating with a cover plate and a housing according to an embodiment of the present disclosure;
Fig. 5a is a diagram of a sealing structure under a cooperation fixing (incomplete cooperation fixing) state according to an embodiment of the present disclosure; and
Fig. 5b is a front view of a section a-a'-a" as shown in Fig. 5a.

The brief description of reference numerals in the drawings is as follows: 1-cover plate; 11-first wire passing end; 111-first clamping boss; 12-first frame; 121-first sealing groove; 2-first sealing element; 21-sealing pad; 211-first wire passing hole groove; 212-first material reducing groove; 213-first clamping groove; 22-sealing strip; 221-double-peak sealing face portion; 2211-projection; 222-clamping rib; 3-second sealing element; 31-main sealing portion; 311-rib; 312-second wire passing hole groove; 313-second material reducing groove; 314-clamping ring; 315-coating layer; 316-second clamping groove; 32-plug portion; 321-groove; 33-intermediate connecting portion; 4-housing; 41-second wire passing end; 411-second clamping boss; 42-second frame; 421-second sealing groove; 51-first bolt hole; 52-second bolt hole; and X-preset inclined angle.

### DETAILED DESCRIPTION

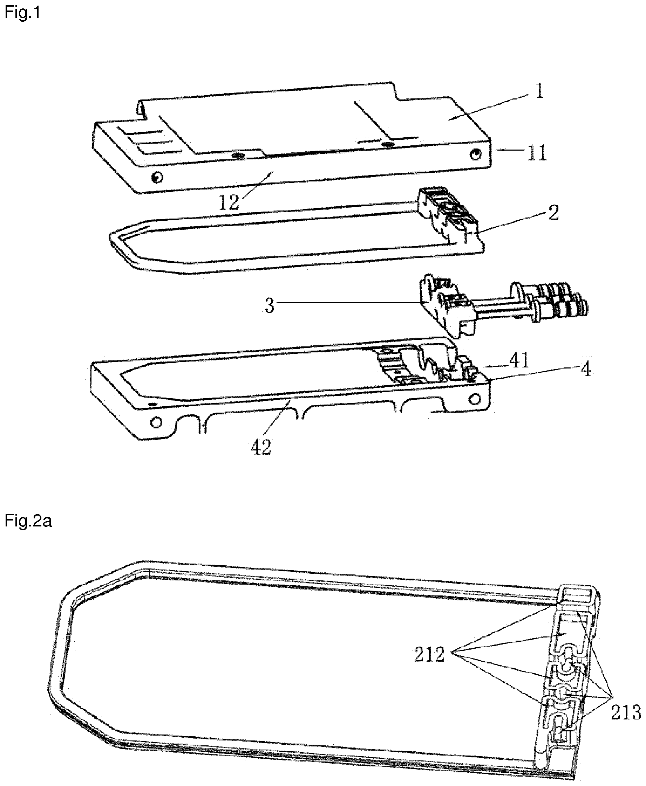

As shown in Fig. 1 to Fig. 5b, an embodiment of the present disclosure provides a sealing structure, which includes: a cover plate 1, a first sealing element 2 is assembled therein; and a housing 4 correspondingly connected to the cover plate 1, a second sealing element 3 is assembled therein, wherein the first sealing element 2 and the second sealing element 3 are butted and fixed together.

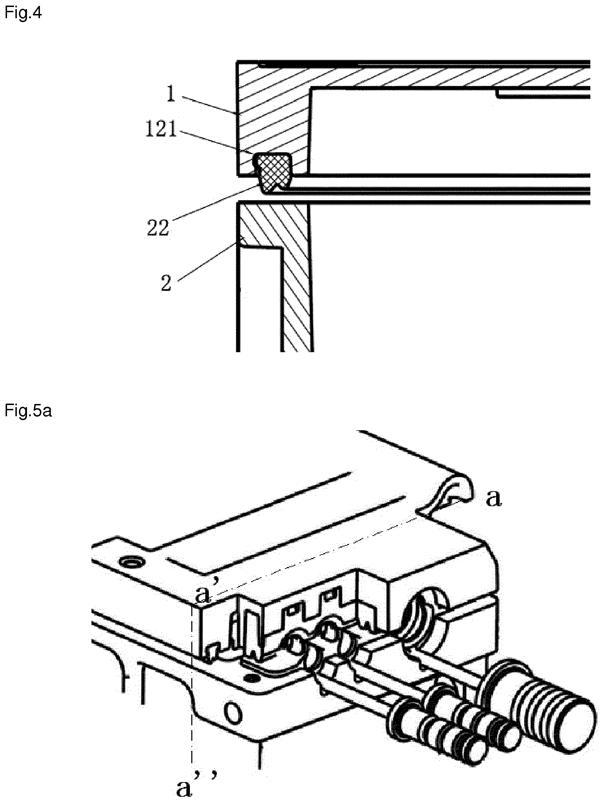

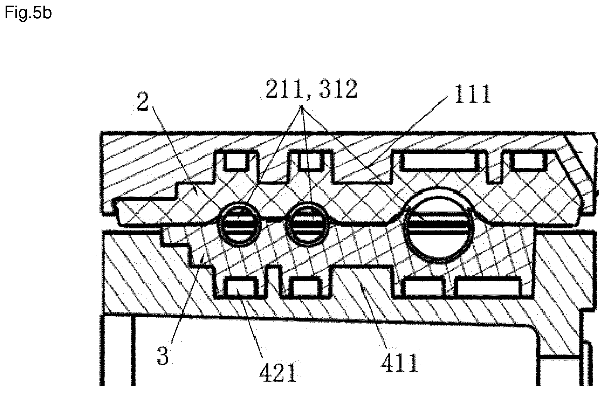

Specifically, the cover plate 1 includes a first wire passing end 11, at least one first clamping boss 111 (Fig. 5b) is arranged thereon; and a first frame 12 connected to the first wire passing end 11, a first sealing groove 121 (Fig. 4) is formed therein. The housing 4 includes: a second wire passing end 41 corresponding to the first wire passing end 11, at least one second clamping boss 411 (Fig. 5b) is arranged thereon; and a second frame 42 connected to the second wire passing end 41, a second sealing groove 421 (Fig. 5b) is formed in the second wire passing end 41.

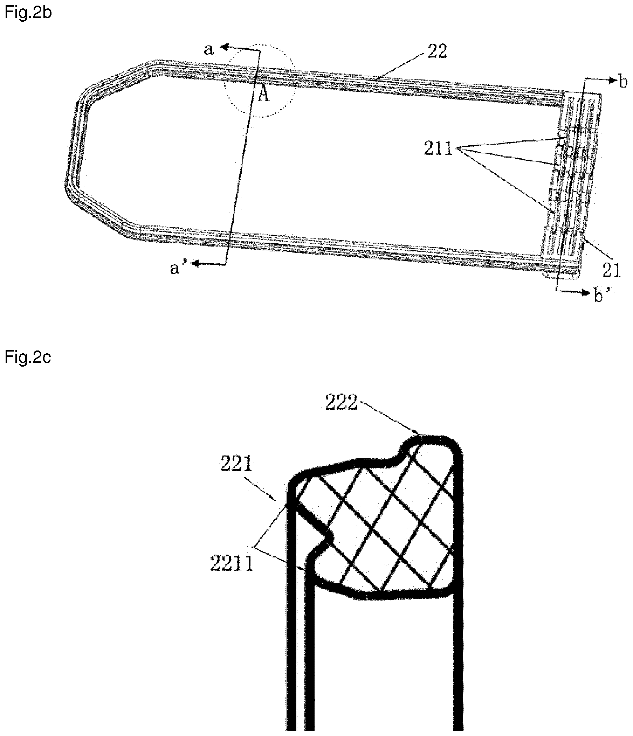

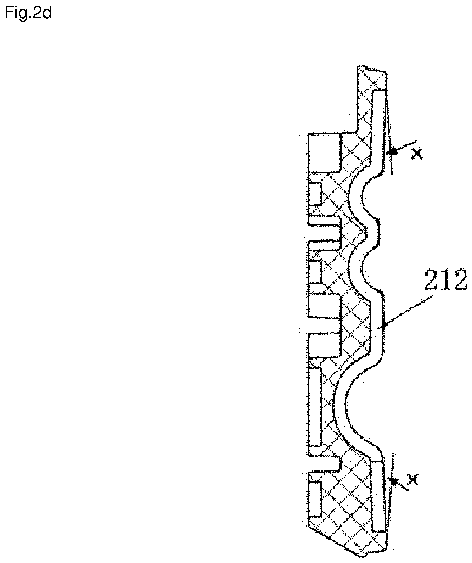

As shown in Fig. 2a to Fig. 2d, the first sealing element 2 includes: a sealing strip 22 cooperating with the first sealing groove 121; and a sealing pad 21 connected to the sealing strip 22, the sealing pad 21 corresponds to the first wire passing end 11 in position. The sealing strip 22 include a double-peak sealing face portion 221, a projection 2211 (Fig. 2c) is arranged thereon, the double-peak sealing face portion 221 cooperates with a sealing face of the housing 4 to achieve sealing after the cover plate 1 and the housing 4 are cooperatively fixed so as to improve the sealing reliability; and a clamping rib 222 is installed at a lateral end of the double-peak sealing face portion 221, the clamping rib 222 is in clamping cooperation with the first sealing groove 121, thereby guaranteeing that the sealing strip 22 is convenient to install and does not disengage after being installed, eliminating a traditional dispensing fixing mode and reducing time and dispensing costs. The sealing pad 21 includes a pad body; a first wire passing hole groove 211 and at least one first material reducing groove 212 (Fig. 2a and Fig. 2b) are formed in the pad body, the first wire passing hole groove 211 is configured to cooperatively achieve sealing of an installed cable so as to improve the sealing property, the first material reducing groove 212 is capable of increasing the compression amount of the sealing pad 21 and guaranteeing an appropriate filling rate; and at least one first clamping groove 213 (Fig. 2a) cooperating with the first clamping boss 111 is also formed in the pad body, which achieves clamping assembly between the sealing pad 21 and the cover plate 1, eliminates the conventional dispensing fixing mode, reduces the time and dispensing costs, and regards the first clamping groove 213 as a material reducing design for the sealing pad 21. In addition, in order to guarantee good transitional connection between the sealing strip 22 and the sealing pad 21 of the first sealing element 2, a certain angle is designed at a combined position of the sealing pad 21 and the sealing strip 22, namely a preset inclined angle X is formed between two combined surfaces of the sealing strip 22 and the sealing pad 21, the continuity of the entire combined surface is guaranteed, and more reliable sealing is guaranteed.

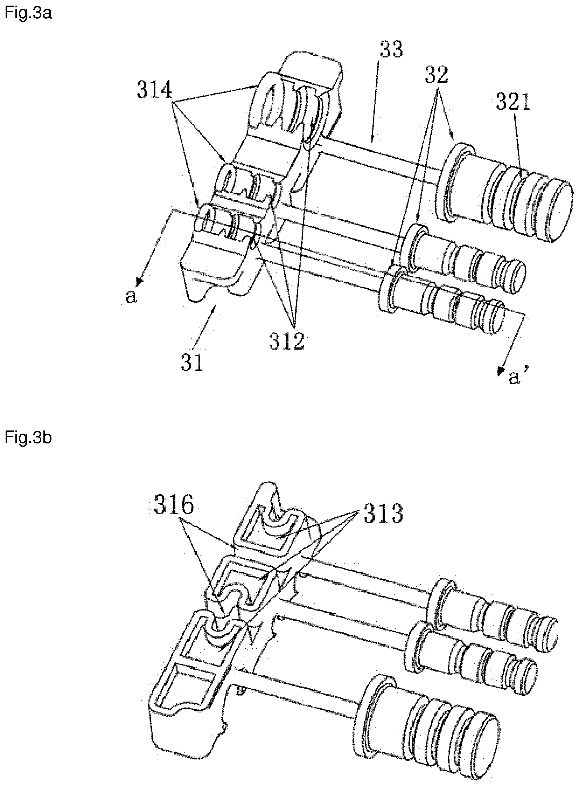

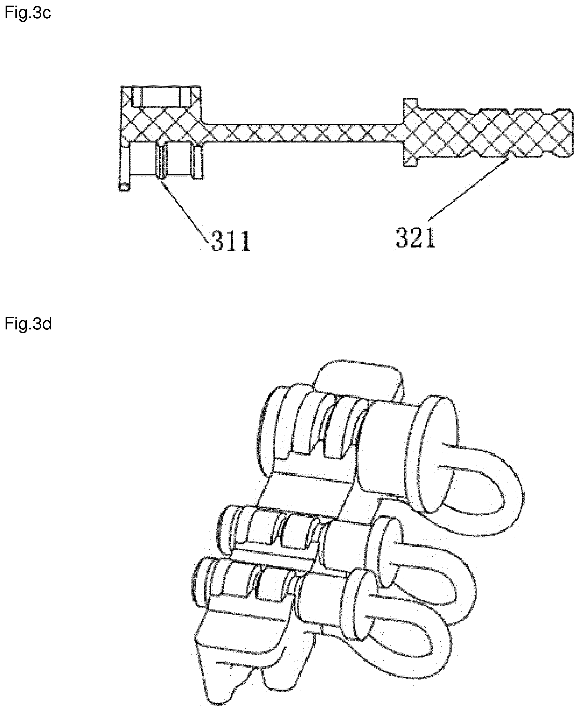

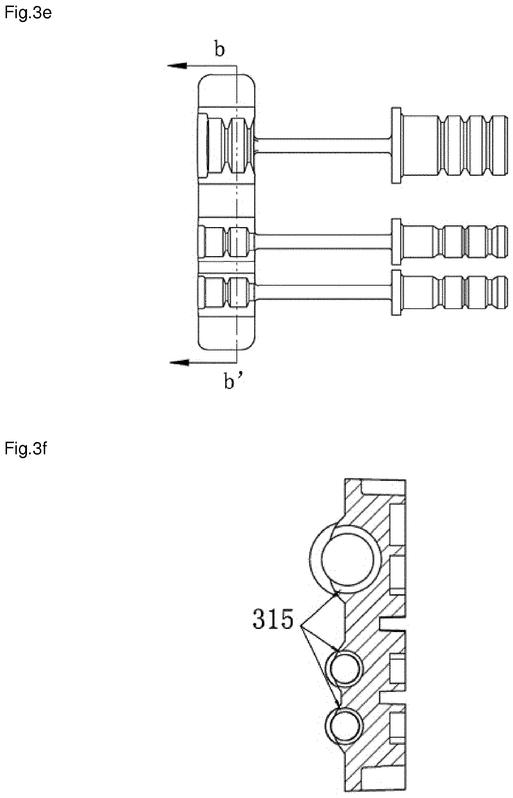

As shown in Fig. 3a to Fig. 3f, the second sealing element 3 includes: a main sealing portion 31, a plug portion 32, and an intermediate connecting portion 33 connecting the main sealing portion 31 to the plug portion 32. The main sealing portion 31 includes: a sealing portion main body, a plurality of ribs 311 and at least one second wire passing hole groove 312 cooperating with the first wire passing hole groove 221 are arranged on the sealing portion main body, the sizes of the second wire passing hole groove 312 and the first wire passing hole groove 221 can be designed according to the comprehensive consideration of specifications of a corresponding cable and compatible cables; the ribs 311 can achieve requirements for large compression amount during cable sealing and meet the sealing compatibility of different wire diameters; at least one second material reducing groove 313 can also be formed in the sealing portion main body, which can further improve the compression amount of the second sealing element 3 and guarantee the appropriate filling rate so as to achieve large compression amount and smaller stress for the whole sealing structure; at least one clamping ring 314 is arranged at an end of the second wire passing hole groove 312, which guarantees that the plug portion 32 does not disengage and does not warp up after the first wire passing hole groove 221, the second wire passing hole groove 312 and the plug portion 32 are assembled cooperatively; a coating layer 315 coats the second wire passing hole groove 312, the coating layer 315 is capable of better cooperating with the cable structurally during the sealing of the cable so as to improve the sealing reliability; and at least one second clamping groove 316 (Fig. 3b) cooperating with the second clamping boss 411 is also formed in the sealing portion main body, which achieves clamping assembly between the second sealing element 3 and the housing 4, eliminates the conventional dispensing fixing mode, reduces the time and dispensing costs, and regards the clamping groove as a material reducing design for the second sealing element 3. According to the sealing structure in the embodiment of the present disclosure, when the cable is not installed, the plug portion 32 can replace the cable to achieve the sealing of the first wire passing hole groove 221 and the second wire passing hole groove 312. In addition, a plurality of grooves 321 (Fig. 3c) cooperating with the ribs 311 are formed in the plug portion 32; when the grooves 321 cooperate with the ribs 311, not only the compression amount and the compress force can be decreased, but also the sealing property is improved.

In addition, in order to achieve the higher sealing reliability and compressibility of the sealing structure according to the embodiment of the present disclosure, the first sealing element 2 and the second sealing element 3 are made of elastic materials preferably.

During the assembly of the sealing structure according to the embodiment of the present disclosure, the first sealing element 2 and the cover plate 1 are correspondingly fixed by clamping and assembling the double-peak sealing face portion 221, the clamping rib 222 and the like on the sealing strip 22 of the first sealing element 2 with the first sealing groove 121 in the first frame 12 of the cover plate 1, the second sealing element 3 and the housing 4 are correspondingly fixed by clamping and assembling the second clamping groove 316 and the like on the main sealing portion 31 of the second sealing element 3 with the second clamping boss 411 on the housing 4, and then the two components are assembled and fixed through screws or other forms, so that a chamber formed by the cover plate 1 and the housing 4 can be sealed. As shown in Fig. 5a, the cover plate 1 and the housing 4 are cooperatively fixed in an incomplete manner, a wire passing hole formed by the first wire passing hole groove 211 and the second wire passing hole groove 312 is configured to install the cable, and when no cable comes in or goes out, the plug portion 32 is configured to carry out blocking sealing; as shown in Fig. 5b, certain compression amounts are designed for the first sealing element 2 and the second sealing element 3, the first wire passing hole groove 211 of the first sealing element 2 cooperates with the coating layer 315 of the second sealing element 3 and an outer circle of the clamping ring 314, the cable can be more tightly sealed, and the first clamping boss 111 and the second clamping boss 411 can be clamped and assembled with the first sealing element 2 and the second sealing element 3 respectively.

The sealing structure according to the embodiment of the present disclosure can be widely applied to various technical fields of sealing. When the sealing structure is applicable to a maintenance window of communication equipment, due to the fact that the maintenance window is a structural form added to a complete machine structure usually and can also serve as an independent structural unit, the sealing structure according to the embodiment of the present disclosure can achieve sealing between the maintenance window and a sealing interface of the housing 4, and can meet the requirements for waterproof and airtight properties and the like of a complete machine.

Obviously, by means of the technical solutions of the embodiment of the present disclosure, compared with the related art, the embodiment of the present disclosure has substantial characteristics, is not obvious to those skilled in the art, and brings obvious beneficial effects that according to the sealing structure in the embodiment of the present disclosure, the cover plate 1 provided with the first sealing element 2 and the housing 4 provided with the second sealing element 3 are assembled and connected, and the first sealing element 2 and the second sealing element 3 are butted and fixed together, so that a sealing cavity is formed inside a constituted integral structure, and the sealing structure is strong in sealing property, high in module compatibility, and convenient and fast to assemble and disassemble; the sealing strip 22 and the sealing pad 21 of the first sealing element 2 are provided with the double-peak sealing face portion 221 and the first wire passing hole groove 211 respectively, the second sealing element 3 is provided with the plug portion 32, and the main sealing portion 31 is provided with the components such as the rib 211, the second wire passing hole groove 312, the clamping ring 314 and the coating layer 315, which are butted and assembled, thereby greatly improving the sealing reliability of the sealing structure in case of no cable; the sealing pad 21 of the first sealing element 2 is provided with the first material reducing groove 212, a preset inclined angle X is formed between two combined surfaces of the sealing strip 22 and the sealing pad 21, and the main sealing portion 31 of the second sealing element 3 is provided with the second material reducing groove 313, the ribs 311 and the like, so that the larger compression amount, appropriate filling rate and smaller structural part stress of the sealing structure are guaranteed, and meanwhile, the perfect combination of all parts of the first sealing element 2 and the second sealing element 3 and the appropriate compression amount are ensured; the components such as the first clamping groove 213 and the clamping rib 222 of the first sealing element 2 and the second clamping groove 316 of the second sealing element 3 are in butted cooperation with the cover plate 1, the housing 4 and the like, thereby being simple, convenient and fast in installation and maintenance; in addition, the assembling combination of the cover plate 1, the housing 4, the first sealing element 2 and the second sealing element 3 in the embodiment of the present disclosure can be applied to different sealing interface installation modes and a certain wire diameter variation, and the compatibility is high; and the sealing structure according to the embodiment of the present disclosure is high in generality, can be used in multiple occasions, and can be widely applied to various technical fields of sealing.

In the description of the specification, "first", "second" and other terms are only used to describe an objective, and cannot be interpreted as indication or implication of relative importance and restriction of a protective scope of the present disclosure. In addition, although the present disclosure is described in detail, the present disclosure is not restricted thereto, and those skilled in the art can make modifications according to contents or principles recorded in the present disclosure. Thus, various modifications made according to the contents or the principles recorded in the present disclosure should be interpreted as falling within the protective scope of the present disclosure.

## Claims

1. A sealing structure comprising a cover plate (1), a first sealing element (2) is assembled therein; and
a housing (4) correspondingly connected to the cover plate (1), a second sealing element (3) is assembled therein,
wherein the first sealing element (2) and the second sealing element (3) are butted and fixed by fastening between the cover plate (1) and the housing (4);
**characterized in that** the cover plate (1) comprises: a first wire passing end (11), at least one first clamping boss (111) is arranged thereon; and a first frame (12) connected to the first wire passing end (11), a first sealing groove (121) is formed therein;
wherein the first sealing element (2) comprises: a sealing strip (22) cooperating with the first sealing groove (121); and a sealing pad (21) connected to the sealing strip (22) and corresponding to the first wire passing end (11) in position;
wherein the sealing strip (22) comprises: a double-peak sealing face portion (221), a projection (2211) is arranged thereon; and a clamping rib (222) installed at a lateral end of the double-peak sealing face portion (221) and being in clamping cooperation with the first sealing groove (121).

2. The sealing structure according to claim 1, wherein the housing (4) comprises:
a second wire passing end (41) corresponding to the first wire passing end (11), at least one second clamping boss (411) is arranged thereon; and
a second frame (42) connected to the second wire passing end (41) and cooperating with the first frame (12), a second sealing groove (421) is formed therein.

3. The sealing structure according to claim 1, wherein the sealing pad (21) comprises:
a pad body;
a first wire passing hole groove (211) and at least one first material reducing groove (212) formed in the pad body; and
at least one first clamping groove (213) formed in the pad body and cooperating with the first clamping boss (111).

4. The sealing structure according to claim 1, wherein a preset inclined angle (X) is formed between two combined surfaces of the sealing strip (22) and the sealing pad (21).

5. The sealing structure according to claim 3, wherein the second sealing element (3) comprises:
a main sealing portion (31) and a plug portion (32); and
an intermediate connecting portion (33) connecting the main sealing portion (31) to the plug portion (32).

6. The sealing structure according to claim 5, wherein the main sealing portion (31) comprises:
a sealing portion main body;
a plurality of ribs (311) arranged on the sealing portion main body;
at least one second wire passing hole groove (312) formed in the sealing portion main body and cooperating with the first wire passing hole groove (221);
at least one second material reducing groove (313) formed in the sealing portion main body;
at least one clamping ring (314) arranged at an end of the second wire passing hole groove (312);
a coating layer (315) coating the second wire passing hole groove (312); and
at least one second clamping groove (316) formed in the sealing portion main body and cooperating with the second clamping boss (411).

7. The sealing structure according to claim 6, wherein a plurality of grooves (321) cooperating with the ribs (311) are formed in the plug portion (32).

8. The sealing structure according to any one of claims 1 to 7, wherein the first sealing element (2) and the second sealing element (3) are made of elastic materials.

## Patentansprüche

1. Dichtungsstruktur, umfassend:
eine Abdeckpplatte (1), ein erstes Dichtungselement (2), das darin montiert ist,
ein Gehäuse (4), das entsprechend mit der Abdeckplatte (1) verbunden ist, ein zweites Dichtungselement (3), das darin montiert ist,
wobei das erste Dichtungselement (2) und das zweite Dichtungselement (3) durch Befestigung zwischen der Abdeckplatte (1) und dem Gehäuse (4) konifiziert und fixiert sind,
**dadurch gekennzeichnet, dass** die Abdeckplatte (1) Folgendes umfasst: ein erstes Drahtdurchgangsende (11), mindestens einen ersten Klemmnocken (111), der darauf angeordnet ist; und einen ersten Rahmen (12), der mit dem ersten Drahtdurchgangsende (11) verbunden ist, eine erste Dichtungsnut (121), die darin gebildet ist,
wobei das erste Dichtungselement (2) Folgendes umfasst: einen Dichtungsstreifen (22), der mit der ersten Dichtungsnut (121) zusammenarbeitet, und ein Dichtungskissen (21), das mit dem Dichtungsstreifen (22) verbunden ist und dem ersten Drahtdurchgangsende (11) in seiner Position entspricht;
wobei der Dichtungsstreifen (22) Folgendes umfasst: einen doppelspitzigen Dichtungsseitenabschnitt (221), einen Vorsprung (2211), der darauf angeordnet ist, und eine Klemmrippe (222), die an einem seitlichen Ende des doppelspitzigen Dichtungsseitenabschnitts (221) installiert ist und mit der ersten Dichtungsnut (121) klemmend zusammenarbeitet.

2. Dichtungsstruktur nach Anspruch 1, wobei das Gehäuse (4) Folgendes umfasst:
ein zweites Drahtdurchgangsende (41), das dem ersten Drahtdurchgangsende (11) entspricht, mindestens einen zweiten Klemmnocken (411), der darauf angeordnet ist; und
einen zweiten Rahmen (42), der mit dem zweiten Drahtdurchgangsende (41) verbunden ist und mit dem ersten Rahmen (12) zusammenarbeitet, eine zweite Dichtungsnut (421), die darin gebildet ist.

3. Dichtungsstruktur nach Anspruch 1, wobei das Dichtungskissen (21) Folgendes umfasst:
einen Kissenkörper;
eine ersten Drahtdurchgangs-Lochnut (211) und mindestens eine erste Material-reduzierende Nut (212), die im Kissenkörper gebildet ist; und
mindestens eine erste Klemmnut (213), die im Kissenkörper gebildet ist und mit dem ersten Klemmnocken (111) zusammenarbeitet.

4. Dichtungsstruktur nach Anspruch 1, wobei ein voreingestellter geneigter Winkel (X) zwischen zwei kombinierten Oberflächen des Dichtungsstreifens (22) und des Dichtungskissens (21) gebildet ist.

5. Dichtungsstruktur nach Anspruch 3, wobei das zweite Dichtungselement (3) Folgendes umfasst:
einen Hauptdichtungsabschnitt (31) und einen Steckerabschnitt (32); und
einen Zwischenverbindungsabschnitt (33), der den Hauptdichtungsabschnitt (31) mit dem Steckerabschnitt (32) verbindet.

6. Dichtstruktur nach Anspruch 5, wobei der Hauptdichtabschnitt (31) Folgendes umfasst:
einen Dichtungsabschnitt-Hauptkörper;
eine Vielzahl von Rippen (311), die auf dem Dichtungsabschnitt-Hauptkörper angeordnet sind;
mindestens eine zweite Drahtdurchgangs-Lochnut (312), die im Dichtungsabschnitt-Hauptkörper gebildet ist und mit der ersten Drahtdurchgangs-Lochnut (221) zusammenarbeitet,
mindestens eine zweite Material-reduzierende Nut (313), die im Dichtungsabschnitt-Hauptkörper gebildet ist;
mindestens einen Klemmring (314), der an einem Ende der zweiten Drahtdurchgangs-Lochnut (312) angeordnet ist;
eine Deckschicht (315), die die zweite Drahtdurchgangs-Lochnut (312) abdeckt; und
mindestens eine zweite Klemmnut (316), die im Dichtungsabschnitt-Hauptkörper gebildet ist und mit dem zweiten Klemmnocken (411) zusam menzuarbeitet.

7. Dichtungsstruktur nach Anspruch 6, wobei eine Vielzahl von Nuten (321), die mit den Rippen zusammenarbeitet (311), im Steckerabschnitt (32) gebildet ist.

8. Dichtungsstruktur nach einem der Ansprüche 1 bis 7, wobei das erste Dichtungselement (2) und das zweite Dichtungselement (3) aus elastischen Materialien hergestellt sind.

## Revendications

1. Structure d'étanchéité comprenant :
une plaque de couvercle (1), un premier élément d'étanchéité (2) est assemblé à l'intérieur de cette dernière ; et
un boîtier (4) raccordé, de manière correspondante, à la plaque de couvercle (1), un second élément d'étanchéité (3) est assemblé à l'intérieur ce dernier,
dans laquelle le premier élément d'étanchéité (2) et le second élément d'étanchéité (3) sont aboutés et fixés par fixation entre la plaque de couvercle (1) et le boîtier (4) ;
**caractérisée en ce que** la plaque de couvercle (1) comprend : une première extrémité de passage de fil (11), au moins un premier bossage de serrage (111) est agencé sur cette dernière ; et un premier bâti (12) raccordé à la première extrémité de passage de fil (11), une première rainure d'étanchéité (121) est formée à l'intérieur de ce dernier ;
dans laquelle le premier élément d'étanchéité (2) comprend : une bande d'étanchéité (22) coopérant avec la première rainure d'étanchéité (121) ; et un coussinet d'étanchéité (21) raccordé à la bande d'étanchéité (22) et correspondant à la première extrémité de passage de fil (11) en position ;
dans laquelle la bande d'étanchéité (22) comprend : une partie de face d'étanchéité à double pic (221), une saillie (2211) est agencée sur cette dernière ; et une nervure de serrage (222) installée au niveau d'une extrémité latérale de la partie de face d'étanchéité à double pic (221) et étant en coopération de serrage avec la première rainure d'étanchéité (121).

2. Structure d'étanchéité selon la revendication 1, dans laquelle le boîtier (4) comprend :
une seconde extrémité de passage de fil (41) correspondant à la première extrémité de passage de fil (11), au moins un second bossage de serrage (411) est agencé sur cette dernière ; et
un second bâti (42) raccordé à la seconde extrémité de passage de fil (41) et coopérant avec le premier bâti (12), une seconde rainure d'étanchéité (421) est formée à l'intérieur de ce dernier.

3. Structure d'étanchéité selon la revendication 1, dans laquelle le coussinet d'étanchéité (21) comprend :
un corps de coussinet ;
une première rainure de trou de passage de fil (211) et au moins une première rainure de réduction de matériau (212) formée dans le corps de coussinet ; et
au moins une première rainure de serrage (213) formée dans le corps de coussinet et coopérant avec le premier bossage de serrage (111).

4. Structure d'étanchéité selon la revendication 1, dans laquelle un angle incliné (X) prédéterminé est formé entre deux surfaces combinées de la bande d'étanchéité (22) et du coussinet d'étanchéité (21).

5. Structure d'étanchéité selon la revendication 3, dans laquelle le second élément d'étanchéité (3) comprend :
une partie d'étanchéité principale (31) et une partie de bouchon (32) ; et
une partie de raccordement intermédiaire (33) raccordant la partie d'étanchéité principale (31) à la partie de bouchon (32).

6. Structure d'étanchéité selon la revendication 5, dans laquelle la partie d'étanchéité principale (31) comprend :
un corps principal de partie d'étanchéité ;
une pluralité de nervures (311) agencées sur le corps principal de partie d'étanchéité ;
au moins une seconde rainure de trou de passage de fil (312) formée dans le corps principal de partie d'étanchéité et coopérant avec la première rainure de trou de passage de fil (221) ;
au moins une seconde rainure de réduction de matériau (313) formée dans le corps principal de partie d'étanchéité ;
au moins une bague de serrage (314) agencée au niveau d'une extrémité de la seconde rainure de trou de passage de fil (312) ;
une couche de revêtement (315) recouvrant la seconde rainure de trou de passage de fil (312) ; et
au moins une seconde rainure de serrage (316) formée dans le corps principal de partie d'étanchéité et coopérant avec le second bossage de serrage (411).

7. Structure d'étanchéité selon la revendication 6, dans laquelle une pluralité de rainures (321) coopérant avec les nervures (311) sont formées dans la partie de bouchon (32).

8. Structure d'étanchéité selon l'une quelconque des revendications 1 à 7, dans laquelle le premier élément d'étanchéité (2) et le second élément d'étanchéité (3) sont réalisés à partir de matériaux élastiques.
